(19) Europäisches Patentamt
European Patent Office
Office européen des brevets

(11) Publication number: 0 013 609
A1

(12) EUROPEAN PATENT APPLICATION

(21) Application number: 80300042.1

(22) Date of filing: 04.01.80

(51) Int. Cl.$^3$: C 09 B 29/36
C 09 B 29/00, D 06 P 3/06

(30) Priority: 15.01.79 GB 7901493

(43) Date of publication of application: 23.07.80 Bulletin 80/15

(84) Designated Contracting States: BE CH DE FR GB IT

(71) Applicant: IMPERIAL CHEMICAL INDUSTRIES LIMITED
Imperial Chemical House Millbank
London SW1P 3JF(GB)

(72) Inventor: Herbert, John Albert Leslie
52 Rudgwick Drive
Brandlesholme Bury, Lancs.(GB)

(72) Inventor: Yelland, Michael
Edgeside House Ashworth Lane
Waterfoot Rossendale, Lancs.(GB)

(74) Representative: Stephenson, Kenneth et al,
Imperial Chemical Industries Limited Legal Department: Patents Thames House North Millbank
London SW1P 4QG(GB)

(54) **Water-soluble monoazo dyes of the benzene azo indole series, their preparation and their application for the colouration of polyamide textile materials.**

(57) Water-soluble monoazo dyes having the formula:

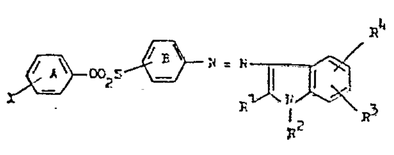

in which rings A and B may carry other substituents, X represents hydrogen, carboxy or sulpho, $R^1$ represents $C_{1-4}$alkyl or aryl, $R^2$ represents hydrogen or optionally substituted $C_{1-4}$alkyl, $R^3$ represents hydrogen, halogen, $C_{1-4}$alkyl, $C_{1-4}$alkoxy, cyano or carboxy and $R^4$ represents hydrogen, halogen, $C_{1-4}$alkyl or sulpho, the substituents being such that the dye molecule contains either one or two sulpho groups.

The dyes are applicable as acid dyes to natural and synthetic polyamide textiles on which they give yellow to orange shades.

EP 0 013 609 A1

This invention relates to monoazo dyes and their application to textile materials.

According to the invention, there are provided water-soluble monoazo dyes which, in the form of the free acids, have the formula:

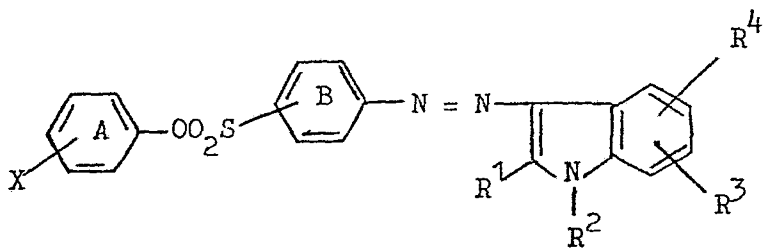

(I)

in which rings A and B may carry other substituents, X represents hydrogen, carboxy or sulpho, $R^1$ represents $C_{1-4}$alkyl or aryl, $R^2$ represents hydrogen or optionally substituted $C_{1-4}$alkyl, $R^3$ represents hydrogen, halogen, $C_{1-4}$alkyl, $C_{1-4}$alkoxy, cyano or carboxy and $R^4$ represents hydrogen, halogen, $C_{1-4}$alkyl or sulpho, the substituents being such that the dye molecule contains either one or two sulpho groups.

Other substituents which may be present on ring A in addition to those shown in the formula include halogen atoms, especially chlorine and bromine, $C_{1-4}$alkyl, $C_{1-4}$alkoxy and cycloalkyl radicals. Other substituents which may be present on ring B include halogen atoms, especially chlorine and bromine, $C_{1-4}$alkyl, $C_{1-4}$alkoxy, sulpho and carboxy radicals. Substituents which may be present on the optionally substituted alkyl radicals represented by $R^2$ include cyano, carbamoyl and carboxy radicals.

$R^1$ is preferably methyl or phenyl.

The dyes of the invention preferably contain one sulphonic acid group and this is preferably X or $R^4$.

Particularly valuable dyes within the scope of Formula I have a single sulphonic acid group and are represented by the formula:

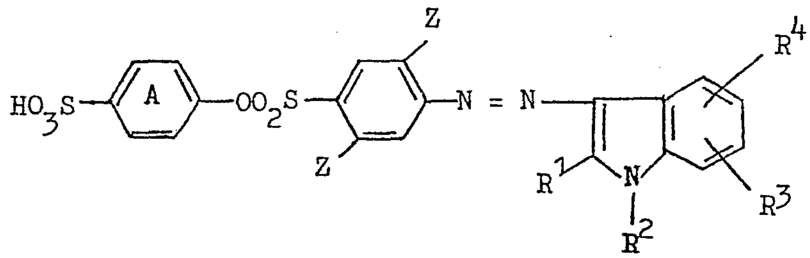

(II)

in which ring A carries no additional substituents, Z represents hydrogen or chlorine, $R^1$ is methyl or phenyl and $R^2$, $R^3$ and $R^4$ are hydrogen.

The dyes of the invention may be prepared by diazotising a primary amine of the formula:

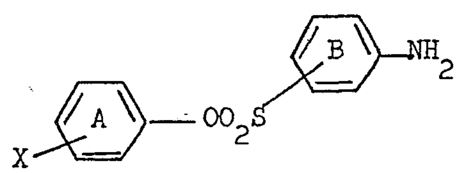

(III)

and coupling the resulting diazo compound with an indole coupling component of the formula:

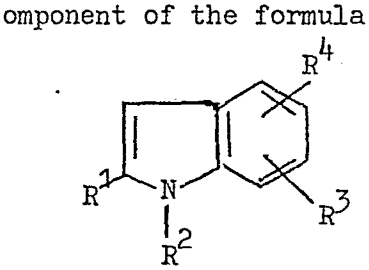

(IV)

the symbols A, B, X, $R^1$, $R^2$, $R^3$ and $R^4$ having the meanings given above, the primary amine and the coupling component together containing either one or two sulphonic acid groups.

Primary amines of Formula III may be prepared by condensing a nitro- or acylaminobenzenesulphonyl chloride of the formula:

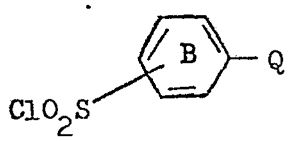 (V)

with a phenol of the formula:

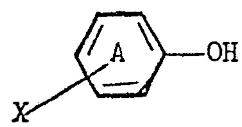 (VI)

under alkaline conditions followed by reduction of the nitro group or acid hydrolysis of the acylamino group. In Formula V, the symbol Q represents a nitro or acylamino group and ring B may be substituted as previously stated. In Formula VI, the symbol X has the meaning given above and ring A may be substituted as previously stated.

Suitable sulphonyl chlorides of Formula V include p-acetylaminobenzenesulphonyl chloride, 2-methyl-5-acetylaminobenzenesulphonyl chloride, 3- and 4-nitrobenzenesulphonyl chlorides, 2-methoxy-5-acetylaminobenzene sulphonyl chloride, and 3-chloro-4-acetylaminobenzenesulphonyl chloride.

Suitable phenols of Formula VI include phenol, o, m and p-cresols, 2,5-dimethylphenol, 2,6-dimethylphenol, 2,4-dimethylphenol, p-tertiarybutylphenol, p-amylphenol, 4-cyclohexylphenol, 4-chlorophenol, 2-methoxyphenol, 4-methoxyphenol, phenol-4-sulphonic acid and p-hydroxybenzoic acid.

Suitable coupling components of Formula IV include 2-methylindole, 2-phenylindole, 2-methylindole-5-sulphonic acid and 2-phenylindole-5-sulphonic acid.

The reactions leading to the formation of the dyes of the invention may be performed using conditions that have been fully described in the prior art for such reactions. Similarly, the dyes may be isolated by known methods and, as in the case of other dyes containing sulphonic acid groups, it is often convenient to isolate and use the dyes in the form of their water-soluble salts, particularly their alkali metal or ammonium salts and especially sodium salts. It is to be understood that the invention relates to both the free acids and their salts.

The dyes of the invention are suitable for applying to polyamide textile materials such as wool and silk but especially to synthetic polyamide textile materials, for example nylon 66 and nylon 6, using any of the general methods known for the application of acid dyes to such materials. The dyes provide yellow to orange shades having a high degree of fastness to wet treatments and to light.

The invention is illustrated but not limited by the following Examples in which all parts and percentages are by weight.

Example 1

A solution of 4.2 parts of sodium nitrite in 30 parts of water is added to a solution of 15 parts of 4-phenoxysulphonylaniline in 300 parts of glacial acetic acid and 30 parts of 35% hydrochloric acid at 0-5°C. Stirring is continued at 0-5°C for 1 hour and the diazo solution is

then added to a stirred solution of 13.2 parts of the sodium salt of 2-methylindole-5-sulphonic acid (88% strength) in 500 parts of water at 0-5°C. Saturated sodium acetate solution is then added to adjust the pH to 4 and stirring is continued at 0-5°C for 2 hours and then at 20°C for a further 20 hours. The precipitate is then filtered off, resuspended in 500 parts of water at 20°C and 32% sodium hydroxide solution is then added to adjust the pH to 9. 100 Parts of sodium chloride are added and the dyestuff is then filtered off, washed with 20% brine solution and dried.

When applied to nylon 66 from a weakly acid bath, a strong yellow shade is obtained which exhibits very good wet fastness and light fastness.

The following Table gives further Examples of dyes of the invention which may be obtained by diazotising the amine listed in the second column and coupling with the coupling component listed in the third column. The shades obtained on nylon are listed in the fourth column.

| Ex. | Amine | Coupling Component | Shade |
|---|---|---|---|
| 2 | 4-phenoxysulphonyl-aniline-4'-sulphonic acid | 2-methylindole | Yellow |
| 3 | " | 2-phenylindole | Reddish-yellow |
| 4 | 2,5-dichloro-4-phenoxy-sulphonylaniline | 2-methylindole-5-sulphonic acid | Yellow |
| 5 | 2,5-dichloro-4-phenoxy-sulphonylaniline-4'-sulphonic acid | 2-methylindole | Reddish-yellow |
| 6 | " | 2-phenylindole | Orange |

| Ex. | Amine | Coupling Component | Shade |
|---|---|---|---|
| 7 | 2-chloro-4-phenoxy sulphonylaniline-4'-sulphonic acid | 2-methylindole | Reddish-yellow |
| 8 | 2-chloro-4-phenoxy sulphonyl aniline | 2-methylindole-5-sulphonic acid | " |
| 9 | 2,6-dibromo-4-phenoxy sulphonyl aniline | " | " |
| 10 | 2-bromo-4-phenoxy sulphonyl aniline | " | " |
| 11 | 4-methyl-3-phenoxy sulphonylaniline-4'-sulphonic acid | 2-methylindole | Greenish yellow |
| 12 | " | 2-phenylindole | Reddish-yellow |
| 13 | 4-(2',5'-dimethyl) phenoxysulphonyl aniline | 2-methylindole-5-sulphonic acid | Yellow |
| 14 | 4-(3'-methyl)phenoxy sulphonyl aniline | " | " |
| 15 | 2,5-dichloro-4-(3'-methyl)phenoxy sulphonylaniline | " | Reddish-yellow |
| 16 | 2,5-dichloro-4-phenoxy sulphonylaniline-4'-sulphonic acid | " | " |
| 17 | 4-phenoxysulphonyl aniline-4'-sulphonic acid | 1-ethyl-2-methyl indole-5-sulphonic acid | Yellow |

0013609
Dd.30590/

CLAIMS

1. A water-soluble monoazo dye which, in the form of the free acid, has the formula:

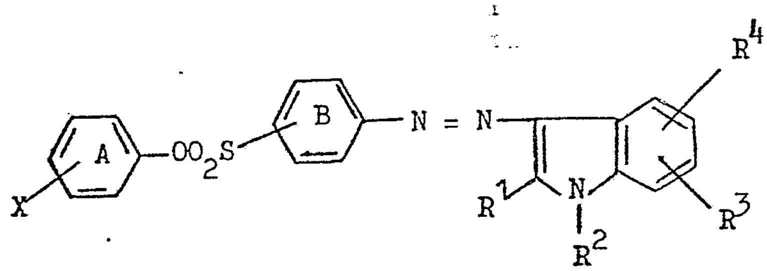

in which rings A and B may carry other substituents, X represents hydrogen, carboxy or sulpho, $R^1$ represents $C_{1-4}$alkyl or aryl, $R^2$ represents hydrogen or optionally substituted $C_{1-4}$alkyl, $R^3$ represents hydrogen, halogen, $C_{1-4}$alkyl, $C_{1-4}$alkoxy, cyano or carboxy and $R^4$ represents hydrogen, halogen, $C_{1-4}$alkyl or sulpho, the substituents being such that the dye molecule contains either one or two sulpho groups.

2. A water-soluble monoazo dye according to claim 1 wherein X is hydrogen or sulpho, ring A may optionally be substituted by one or two $C_{1-4}$ alkyl groups, ring B may optionally be substituted by one or two substituents selected from $C_{1-4}$ alkyl, chlorine and bromine, $R^1$ is $C_{1-4}$ alkyl or phenyl, $R^2$ is hydrogen or $C_{1-4}$ alkyl, $R^3$ is hydrogen and $R^4$ is hydrogen or sulpho.

3. A water-soluble monoazo dye according to claim 1 or claim 2 wherein $R^1$ is methyl or phenyl.

4. A water-soluble monoazo dye according to any one of the preceding claims which contains only one sulphonic acid group.

5. A water-soluble monoazo dye according to claim 4 having the formula:

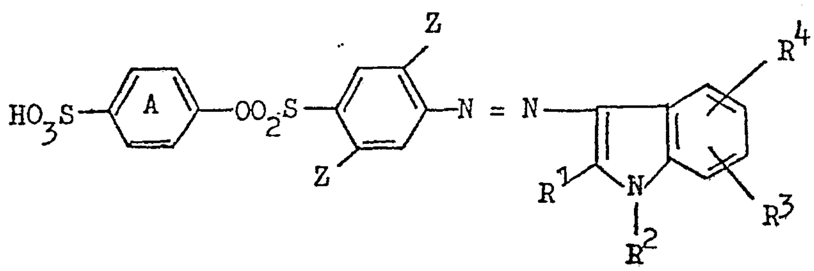

in which ring A carries no additional substituents, Z represents hydrogen or chlorine, $R^1$ is methyl or phenyl and $R^2$, $R^3$ and $R^4$ are hydrogen.

6. A method for the preparation of a water-soluble monoazo dye as defined in claim 1 which comprises diazotising a primary amine of the formula:

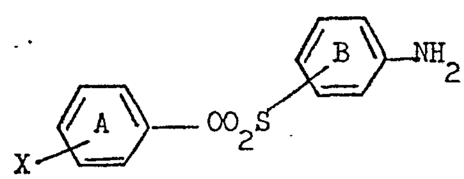

and coupling the resulting diazo compound with an indole coupling component of the formula:

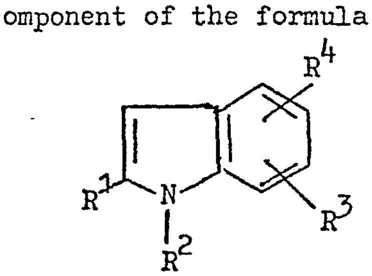

the symbols A, B, X, $R^1$, $R^2$, $R^3$ and $R^4$ having the meanings given in claim 1, the primary amine and the coupling component together containing either one or two sulphonic acid groups.

7. A process for the coloration of polyamide textile materials which comprises applying thereto a water-soluble monoazo dye as defined in claim 1.

KS/BH
2.1.80.

European Patent Office

# EUROPEAN SEARCH REPORT

0013609

Application number

EP 80 30 0042

## DOCUMENTS CONSIDERED TO BE RELEVANT

| Category | Citation of document with indication, where appropriate, of relevant passages | Relevant to claim |
|---|---|---|
| A | FR - A - 2 386 586 (BAYER)<br>* Claims 1-6 *<br>---- | 1 |

CLASSIFICATION OF THE APPLICATION (Int. Cl. 3)

C 09 B 29/36
29/00
D 06 P 3/06

TECHNICAL FIELDS SEARCHED (Int.Cl. 3)

C 09 B 29/36
29/00

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 16-04-1980 | DELANGHE |

EPO Form 1503.1 06.78